# EUROPEAN PATENT SPECIFICATION

(11) **EP 4 510 271 B1**
(45) Date of publication and mention of the grant of the patent: **05.11.2025**
(21) Application number: 22947383.0
(22) Date of filing: 24.06.2022
(51) Int. Cl.: H01M 10/054, H01M 10/0567

(54) **ELECTROLYTE AND SODIUM ION SECONDARY BATTERY, BATTERY PACK, BATTERY MODULE AND ELECTRIC DEVICE COMPRISING SAME**
ELEKTROLYT UND NATRIUMIONENSEKUNDÄRBATTERIE, BATTERIEPACK, BATTERIEMODUL UND ELEKTRISCHE VORRICHTUNG DAMIT
ÉLECTROLYTE ET BATTERIE SECONDAIRE AU SODIUM-ION, BLOC-BATTERIE, MODULE DE BATTERIE ET DISPOSITIF ÉLECTRIQUE LE COMPRENANT

(43) Date of publication of application: 19.02.2025
(73) Proprietor: Contemporary Amperex Technology (Hong Kong) Limited, Central, Central And Western Hong Kong (HK)
(72) Inventor: ZOU, Hailin, Ningde, Fujian 352100 (CN); XU, Ningbo, Ningde, Fujian 352100 (CN); CHEN, Peipei, Ningde, Fujian 352100 (CN)
(74) Representative: Thoma, Michael
(86) International application number: PCT/CN2022/101074
(87) International publication number: WO 2023/245613

(56) References cited:
- EP-A1- 3 471 191
- AU-A1- 2017 225 241
- CN-A- 107 431 245
- CN-A- 108 780 917
- CN-A- 110 718 717
- CN-A- 111 864 254
- CN-A- 113 921 907
- JP-A- 2021 177 463
- JP-A- 2021 177 463
- US-A1- 2018 254 524

## Description

### Technical Field

The present application relates to the technical field of secondary batteries, and in particular to an electrolyte solution, and a sodium-ion secondary battery comprising the electrolyte solution, a battery pack, a battery module, and a power consuming device.

### Background Art

Sodium-ion secondary batteries are an energy storage battery system with a great development prospect by virtue of the advantages of abundant sodium resource, low cost, etc. The batteries structurally comprise a positive electrode and a negative electrode capable of de-intercalating sodium ions, and an electrolyte solution for transmitting the sodium ions. At present, in the sodium-ion secondary batteries, carbonate is generally used as a solvent for the electrolyte solution, and thus, interface passive films formed on the negative electrode and the positive electrode are unstable, resulting in serious self-discharge of the sodium-ion secondary batteries, and low cycling performance.

Therefore, it is of a great application value to develop and design a sodium-ion secondary battery with an improved self-discharge rate and cycling performance. EP3471191A1 discloses an electrolyte solution comprising 1,3-propane sulfone as a first additive and sodium difluoro(oxalato)borate as a second additive.

### Summary of the Invention

In view of the above problems, the present application has been made with an aim to provide an electrolyte solution capable of effectively improving the self-discharge and cycling performance of a battery, and to provide a sodium-ion secondary battery comprising an electrolyte solution of the present application, a battery module, a battery pack, and a power consuming device.

In order to achieve the above objectives, the present application provides an electrolyte solution, wherein the electrolyte solution comprises an electrolyte sodium salt, an organic solvent, and additives, and the additives include:
a) a first additive selected from at least one of sulfur-containing compounds having a boiling point less than or equal to 70°C; and
b) a second additive selected from at least one of an oxalate-containing salt or an oxalate ester,

wherein the oxalate-containing salt is selected from at least one of the following: bis(oxalato)borate (C₄O₈B)ₙ(Mⁿ⁺), difluoro (oxalato)borate (C₂O₄F₂B)ₙ(Mⁿ⁺), difluorobis(oxalato)phosphate (C₂O₈F₂P)ₙ(Mⁿ⁺), tetrafluorobis(oxalato)phosphate (C₂O₄F₄P)ₙ(Mⁿ⁺), ethyl oxalate (C₂O₄C₂H₅)ₙ(Mⁿ⁺), and oxalate (C₂O₄)_{n/2}(Mⁿ⁺); Mⁿ⁺ is a metal cation and/or an organic cation, optionally an alkali metal ion, an alkaline earth metal ion, an aluminum ion or an ammonium ion NH₄⁺, additionally optionally a sodium ion, a lithium ion, a potassium ion, a magnesium ion or an aluminum ion, further optionally a sodium ion, a lithium ion, and a potassium ion; n is 1, 2 or 3, optionally 1 or 2;
the oxalate ester is at least one of the following compounds of formula (I) and formula (II), 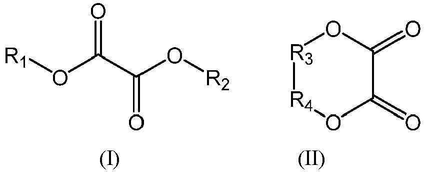
wherein R₁ and R₂ are each independently selected from C₁-C₁₀ alkyl, C₂-C₁₀ alkenyl, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkyleneoxyphenyl or C₁-C₁₀ alkylsulfonyl, wherein the C₁-C₁₀ alkyl, C₂-C₁₀ alkenyl, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkyleneoxyphenyl or C₁-C₁₀ alkylsulfonyl, optionally substituted with one or more substituents selected from a halogen atom, sulfo or nitro; optionally, R₁ and R₂ are each independently selected from C₁-C₄ alkyl;
the halogen atom is selected from one or more of F, Cl, and Br; and
R₃ and R₄ together form C₁-C₂₀ alkylene or C₂-C₁₀ alkenylene, and the C₁-C₂₀ alkylene and C₂-C₁₀ alkenylene are optionally substituted with one or more substituents selected from the following: a halogen atom, nitro, amino, carboxyl, sulfo, C₁-C₁₀ alkylcarbonyl, C₁-C₁₀ alkylsulfonyl, phenyl, C₁-C₁₀ alkylenephenyl, C₁-C₁₀ alkyleneoxyphenyl, C₁-C₁₀ alkylenecarboxyl, and C₁-C₁₀ alkylenesulfo; and optionally, R₃ and R₄ together form -(CH₂)ₘ-, wherein m is an integer of 2-15.

By matching a first additive and a second additive in the electrolyte solution, stable interface passive films with an inorganic salt as a main component are formed on a positive electrode and a negative electrode, such that the self-discharge and the cycling performance of the sodium-ion secondary battery are improved, and meanwhile, the battery has a good power performance.

In any embodiment, in the electrolyte solution of the present application, the oxalate-containing salt in the second additive is selected from lithium bis(oxalato)borate, sodium-difluoro(oxalato)borate, lithium oxalate, lithium difluorobis(oxalato)phosphate, and sodium tetrafluoro(oxalate)phosphate, or a mixture thereof; the compound of formula (I) is selected from dimethyl oxalate, diethyl oxalate, diphenyl oxalate, and diallyl oxalate, or a mixture thereof; and the compound of formula (II) is 1,4-dioxacyclohexan-2,3-dione and/or 1,4-dioxacycloheptadecan-2,3-dione.

Therefore, by further optimizing the components of the electrolyte solution, a stable interface passive film is favorably formed on a positive electrode, preventing the reaction of sodium alkyl carbonate on the positive electrode, stabilizing the potential of the positive electrode, and inhibiting the self-discharge of the positive electrode.

In any embodiment, in the electrolyte solution of the present application, the first additive is selected from sulfur hexafluoride, sulfur tetrafluoride, sulfuryl fluoride, sulfur dioxide, sulfur trioxide, carbon disulfide, dimethyl sulfide, methyl ethyl sulfide, sulfur monofluoride, sulfur difluoride, thionyl fluoride, and thionyl tetrafluoride or a mixture thereof, optionally sulfur hexafluoride, sulfur tetrafluoride, sulfuryl fluoride, sulfur dioxide, sulfur trioxide, and carbon disulfide or a mixture thereof.

Therefore, by further optimizing the components of the electrolyte solution, a stable interface passive film is favorably formed on a negative electrode, preventing the reaction of a carbonate solvent on the negative electrode with a negative electrode active material, stabilizing the potential of the negative electrode, and inhibiting the self-discharge of the negative electrode.

In any embodiment, the mass fraction W1 of the first additive of the present application in the electrolyte solution is 0.01% to 5%, optionally 0.1% to 2%, based on the total mass of the electrolyte solution.

By limiting the range, a negative electrode film layer advantageously has an appropriate amount of sulfur-containing inorganic components after the battery is formed, the negative electrode interface passive film is stable, dense, and moderate in thickness, and the self-discharge and cycling performance of the sodium-ion secondary battery are further improved.

In any embodiment, in the electrolyte solution of the present application, the first additive has a molecular weight of 50 g/mol to 200 g/mol.

By limiting the molecular weight of a low-boiling-point sulfur-containing compound, the compound has a relatively strong diffusion capacity in the electrolyte solution, and can be rapidly diffused to the negative electrode for reaction to form a stable interface passive film.

In any embodiment, in the electrolyte solution of the present application, the mass fraction W2 of the second additive in the electrolyte solution is 0.01% to 5%, optionally 0.1% to 2%, based on the total weight of the electrolyte solution.

By limiting the content of the second additive, the surface of the positive electrode is favorably covered by the interface passive film after an initial charge of the battery. Besides, the interface passive film can sufficiently avoid side reaction of a small amount of sodium alkyl carbonate existing in the electrolyte solution on the positive electrode, thus inhibiting the self-discharge of the positive electrode, and further improving the self-discharge and cycling performance of the sodium-ion secondary battery.

In any embodiment, in the electrolyte solution of the present application, the sum of the mass fractions of the first additive and second additive is 0.5% to 10.5%, optionally 1% to 10%, also additionally optionally 1% to 6%, and further optionally 1% to 3%, based on the total mass of the electrolyte solution, wherein a ratio of the mass fraction W1 of the first additive in the electrolyte solution to the mass fraction W2 of the second additive in the electrolyte solution is 1 : (0.01-100), optionally 1 : (0.1-10) and also optionally 1 : (0.2-5).

Therefore, the electrolyte solution forms stable positive electrode and negative electrode interface passive films with a better conductivity on the surfaces of the positive electrode and negative electrode, such that the battery has remarkably improved self-discharge rate and cycling performance, with a good power performance.

In any embodiment, in the electrolyte solution of the present application, the electrolyte sodium salt is selected from one or more of NaPF₆, NaBF₄, NaN(SO₂F)₂, NaClO₄, NaAsF₆, NaB(C₂O₄)₂, NaBF₂(C₂O₄), NaN(SO₂R_{F})₂, and NaN(SO₂F)(SO₂R_{F}), wherein R_{F} represents C_{b}F_{2b+1}, b is an integer in the range of 1-10, optionally an integer in the range of 1-3, and more optionally, R_{F} is -CF₃, -C₂F₅ or - CF₂CF₂CF₃.

In any embodiment, in the electrolyte solution of the present application, the organic solvent comprises a carbonate organic solvent, wherein the carbonate organic solvent is selected from one or more of ethylene carbonate, propylene carbonate, methyl ethyl carbonate, diethyl carbonate, dimethyl carbonate, dipropyl carbonate, methyl propyl carbonate, ethyl propyl carbonate, and butylene carbonate.

In any embodiment, the electrolyte solution of the present application further comprises a third additive fluoroethylene carbonate (FEC), wherein the mass fraction of the third additive in the electrolyte solution is 0.01% to 10%, preferably 0.1% to 5%. Therefore, the toughness of the positive electrode and negative electrode interface passive films can be improved, the tolerance of the interface passive films to the volume expansion and contraction of the positive electrode and negative electrode in a battery cycling process is improved, the cycling performance of the battery is further improved, and meanwhile, the battery also maintains a good power performance.

A second aspect of the present application provides a sodium-ion secondary battery, comprising an electrolyte solution of the first aspect of the present application.

A third aspect of the present application provides a battery module, comprising a sodium-ion secondary battery of the second aspect of the present application.

A fourth aspect of the present application provides a battery pack comprising a battery module of the third aspect of the present application.

A fifth aspect of the present application provides a power consuming device, comprising at least one of a sodium-ion secondary battery of the second aspect of the present application, a battery module of the third aspect of the present application or a battery pack of the fourth aspect of the present application.

By matching the low-boiling-point sulfur-containing compound first additive and the oxalate-containing salt and/or oxalate ester second additive in the electrolyte solution, stable positive electrode and negative electrode interface passive films are formed, such that the self-discharge rate and the cycling performance of the secondary battery are improved, and meanwhile, the battery has a good power performance. Accordingly, the battery pack, the battery module, and the power consuming device provided by the present application have good self-discharge rate, cycling performance, and power performance.

### Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using the secondary battery according to an embodiment of the present application as a power source.

Description of reference signs:
1. battery pack; 2. upper box body; 3. lower box body; 4. battery module; 5. secondary battery; 51. housing; 52. electrode assembly; 53. top cover assembly.

### Detailed Description of Embodiments

Hereinafter, embodiments of a negative electrode plate and preparing method therefor, a positive electrode plate, a secondary battery, a battery module, a battery pack and an electrical device of the present application are described in detail and specifically disclosed with reference to the accompanying drawings appropriately. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-6. In the present application, unless stated otherwise, the numerical range "a-b" denotes an abbreviated representation of any combination of real numbers between a and b, where both a and b are real numbers. For example, the numerical range "0-5 " means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

At present, in a sodium-ion secondary battery, carbonate is commonly used in an electrolyte solution as a solvent and an interface passive film having sodium alkyl carbonate (ROCO₂Na) and sodium carbonate as main components is formed on a negative electrode. Since the sodium alkyl carbonate can be dissolved in the carbonate solvent, and the alkyl carbonate has strong reducibility, the electrolyte solution can result in continuous reduction reaction on the negative electrode and oxidation reaction on a positive electrode, such that the potential of the negative electrode is continuously increased, the potential of the positive electrode is continuously decreased, with serious self-discharge of the sodium-ion secondary battery.

Unexpectedly, the inventors find that by adding a low-boiling-point sulfur-containing additive and an oxalate-containing salt or oxalate ester additive together into the electrolyte solution, stable interface passive films with an inorganic salt as a main component can be quickly formed both on the negative electrode and the positive electrode, such that the self-discharge and the cycling performance of the sodium-ion secondary battery can be improved on the premise of keeping low interface impedance.

The formulation of the electrolyte solution of the present application is particularly suitable for sodium-ion secondary batteries using a carbon material as a negative electrode.

### [Electrolyte solution]

A first aspect of the present application provides an electrolyte solution, wherein the electrolyte solution comprises an electrolyte sodium salt, an organic solvent, and an additive, and the additive comprises:
a) a first additive selected from at least one of sulfur-containing compounds having a boiling point less than or equal to 70°C; and
b) a second additive selected from at least one of an oxalate-containing salt or an oxalate ester,

wherein the oxalate-containing salt is selected from at least one of the following: bis(oxalato)borate (C₄O₈B)ₙ(Mⁿ⁺), difluoro (oxalato)borate (C₂O₄F₂B)ₙ(Mⁿ⁺), difluorobis(oxalato)phosphate (C₂O₈F₂P)ₙ(Mⁿ⁺), tetrafluorobis(oxalato)phosphate (C₂O₄F₄P)ₙ(Mⁿ⁺), ethyl oxalate (C₂O₄C₂H₅)ₙ(Mⁿ⁺), and oxalate (C₂O₄)_{n/2}(Mⁿ⁺); Mⁿ⁺ is a metal cation and/or an organic cation, optionally an alkali metal ion, an alkaline earth metal, an aluminum ion or an ammonium ion NH₄⁺, additionally optionally a sodium ion, a lithium ion, a potassium ion, a magnesium ion or an aluminum ion, further optionally a sodium ion, a lithium ion, and a potassium ion; n is 1, 2 or 3, optionally 1 or 2;
the oxalate ester is at least one of the following compounds of formula (I) and formula (II), 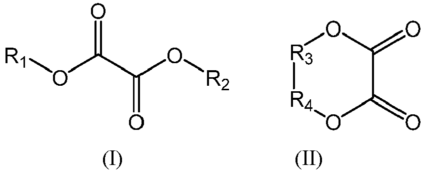
wherein R₁ and R₂ are each independently selected from C₁-C₁₀ alkyl, C₂-C₁₀ alkenyl, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkyleneoxyphenyl or C₁-C₁₀ alkylsulfonyl, wherein the C₁-C₁₀ alkyl, C₂-C₁₀ alkenyl, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkyleneoxyphenyl or C₁-C₁₀ alkylsulfonyl, optionally substituted with one or more substituents selected from a halogen atom, sulfo or nitro; optionally, R₁ and R₂ are each independently selected from C₁-C₄ alkyl;
the halogen atom is selected from one or more of F, Cl, and Br; and
R₃ and R₄ together form C₁-C₂₀ alkylene or C₂-C₁₀ alkenylene, and the C₁-C₂₀ alkylene and C₂-C₁₀ alkenylene are optionally substituted with one or more substituents selected from the following: a halogen atom, nitro, amino, carboxyl, sulfo, C₁-C₁₀ alkylcarbonyl, C₁-C₁₀ alkylsulfonyl, phenyl, C₁-C₁₀ alkylenephenyl, C₁-C₁₀ alkyleneoxyphenyl, C₁-C₁₀ alkylenecarboxyl, and C₁-C₁₀ alkylenesulfo; and optionally, R₃ and R₄ together form -(CH₂)ₘ-, wherein m is an integer of 2-15,
wherein, the oxalate used in the present application has a chemical formula of (C₂O₄)_{n/2} (Mⁿ⁺); when n is an odd number, optionally 1 or 3, the molecular formula is (C₂O₄)ₙ (Mⁿ⁺)₂, and can also be expressed as (C₂O₄)ₙ M; and when n is an even number, optionally 2, the molecular formula is (C₂O₄) (Mⁿ⁺), and can also be expressed as (C₂O₄) M.

In the present application, the used term "C₁-C₂₀ alkyl" refers to a straight-chain or branched-chain saturated aliphatic hydrocarbon group having 1 to 20 carbon atoms. Examples of C₁-C₂₀ alkyl include, but are not limited to, methyl, ethyl, n-propyl, isopropyl, n-butyl, isobutyl, sec-butyl, tert-butyl, n-pentyl, isopentyl, neopentyl, tert-pentyl, 1-methylbutyl, 2-methylbutyl, 1-ethylpropyl, 1,2-dimethylpropyl, hexyl, 1-methylpentyl, 2-methylpentyl, 3-methylpentyl, 4-methylpentyl, 1,2-dimethylbutyl, 1,3-dimethylbutyl, 1,4-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, n-heptyl, n-octyl, n-nonyl, n-decyl, and undecyl. Among these alkyl groups, C₁-C₁₀ alkyl may be selected, C₁-C₆ alkyl may also be selected, and C₁-C₄ alkyl may be further selected. The used terms "C₁-C₂₀ alkylene" and "C₁-C₁₀ alkylene" are divalent groups. The definition of the above groups is also suitable for combination with other groups, for example, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkylenesulfo, and C₁-C₁₀ alkylsulfonyl.

In the present application, the used term "C₂-C₂₀ alkenyl" refers to a straight-chain or branched-chain unsaturated aliphatic hydrocarbon group having 2 to 20 carbon atoms and at least one double bond. Examples thereof include, but are not limited to, vinyl, allyl, 1-propenyl, isopropenyl, 1-butenyl, 2-butenyl, 3-butenyl, 1,3-butadienyl, 1-pentenyl, 2-pentenyl, 3-pentenyl, 4-pentenyl, 1,3-pentadienyl, 1-hexenyl, 2-hexenyl, 3-hexenyl, 4-hexenyl, 5-hexenyl and 1,4-hexadienyl. Among these groups, C₂-C₁₀ alkenyl may be selected, C₂-C₆ alkenyl may also be selected, and C₂-C₄ alkenyl may be further selected. The used terms "C₂-C₂₀ alkenylene" and "C₂-C₁₀ alkenylene" are divalent groups. The definition of the above groups is also suitable for combination with other groups.

In the present application, the used term "C₁-C₁₀ alkyleneoxy" is a divalent group of "C₁-C₁₀ alkoxy". The "C₁-C₁₀ alkoxy" refers to a straight-chain or branched-chain saturated aliphatic hydrocarbon group having 1 to 10 carbon atoms and at least one oxygen atom. Examples of C₁-C₁₀ alkoxy include, but are not limited to, for example, methoxy, ethoxy, n-propoxy, isopropoxy, n-butoxy, isobutoxy, tert-butoxy, n-pentyloxy, isopentyloxy, neopentyloxy, n-hexyloxy, and isohexyloxy. Among these alkyl groups, C₁-C₆ alkoxy may be selected, and C₁-C₄ alkoxy may be further selected. Accordingly, the used terms "C₁-C₆ alkyleneoxy" and "C₁-C₄ alkyleneoxy" are divalent groups. The definition of the above groups is also suitable for combination with other groups, for example, C₁-C₁₀ alkyleneoxyphenyl.

By matching the first additive low-boiling-point sulfur-containing compound and the second additive oxalate-containing salt and/or oxalate ester in the electrolyte solution, stable interface passive films with an inorganic salt as a main component are favorably formed on the positive electrode and the negative electrode at the same time, such that the reaction between the electrolyte solution and active sodium is inhibited, and the potentials of the positive electrode and the negative electrode are stable. Therefore, the self-discharge and cycling performance of the sodium-ion secondary battery are both remarkably improved, and meanwhile, the sodium-ion secondary battery has good power performance.

In any embodiment, the oxalate-containing salt in the second additive in the electrolyte solution of the present application is selected from lithium bis(oxalato)borate, sodium-difluoro(oxalato)borate, lithium oxalate, lithium difluorobis(oxalato)phosphate, and sodium tetrafluoro(oxalate)phosphate, or a mixture thereof; the compound of formula (I) is selected from dimethyl oxalate, diethyl oxalate, diphenyl oxalate, and diallyl oxalate, or a mixture thereof; and the compound of formula (II) is 1,4-dioxacyclohexan-2,3-dione and/or 1,4-dioxacycloheptadecan-2,3-dione.

Compared with the organic solvent of the electrolyte solution, the oxalic acid compound is easier to be oxidized and decomposed on the positive electrode, and a stable interface passive film with sodium oxalate as a main component is formed. Since sodium oxalate is insoluble in the electrolyte solution and the interface passive film is dense, the electrolyte solution cannot directly contact with the positive electrode active material, a small amount of sodium alkylcarbonate (ROCO₂Na) contained in the electrolyte solution cannot be subjected to oxidative decomposition on the positive electrode, and the potential of the positive electrode is stable. Therefore, it is advantageous in further reducing the decrease of the potential of the positive electrode due to the side reaction of sodium alkyl carbonate on the positive electrode.

In some embodiments, the first additive in the electrolyte solution of the present application is selected from sulfur hexafluoride (SF₆), sulfur tetrafluoride (SF₄), sulfuryl fluoride (SO₂F₂), sulfur dioxide (SO₂), sulfur trioxide (SO₃), carbon disulfide (CS₂), dimethyl sulfide (CH₂SCH₃), methyl ethyl sulfide (CH₂SCH₂CH₃), sulfur monofluoride (S₂F₂), sulfur difluoride (SF₂), thionyl fluoride (SOF₂), and thionyl tetrafluoride (SOF₄) or a mixture thereof, optionally sulfur hexafluoride (SF₆), sulfur tetrafluoride (SF₄), sulfuryl fluoride (SO₂F₂), sulfur dioxide (SO₂), sulfur trioxide (SO₃), and carbon disulfide (CS₂) or a mixture thereof.

Compared with the solvent carbonate, the low-boiling-point sulfur-containing compound is easier reduced on the negative electrode to form an interface passive film with a sulfur-containing inorganic salt as a main component. Since the inorganic salt is not dissolved in the electrolyte solution, the interface passive film is stable and the potential of the negative electrode is stable. In addition, the sulfur-containing compound having a boiling point less than 70°C has a high diffusion speed in the electrolyte solution, and can quickly form a film on the negative electrode; and meanwhile, the viscosity of the electrolyte solution is reduced, the conductivity of the sodium-ion secondary battery is improved, and the internal resistance of the battery is reduced.

In some embodiments, the mass fraction W1 of the first additive of the present application in the electrolyte solution is 0.01% to 5%, optionally 0.1% to 2%, based on the total weight of the electrolyte solution. Therefore, when the content of the first additive (the low-boiling-point sulfur-containing compound) is in the above range, a stable, dense and moderate-thickness interface passive film is favorably to be formed on the negative electrode, and the self-discharge and cycling performance of the sodium-ion secondary battery can be further improved.

In the present application, it is understood that the term "sulfur-containing compound having a boiling point less than or equal to 70°C" refers a sulfur-containing compound having a boiling point less than or equal to 70°C measured at normal pressure.

In the present application, the boiling point can be determined in accordance with GB/T 616-2006.

In some embodiments, the sulfur-containing compound is gaseous at normal pressure and normal temperature.

In some embodiments, in the electrolyte solution of the present application, the molecular weight of the first additive is 50 g/mol to 200 g/mol. The low-boiling-point sulfur-containing compound having a molecular weight within this range has a strong diffusion capability and a high diffusion speed in the electrolyte solution.

In some embodiments, in the electrolyte solution of the present application, the mass fraction W2 of the second additive in the electrolyte solution is 0.01% to 5%, optionally 0.1% to 2%, based on the total weight of the electrolyte solution. Therefore, by limiting the content of the second additive, the component of the electrolyte solution is further optimized, the positive electrode with the surface covered by the passive film is favorably formed after the initial charge of the battery, thus avoiding the side reaction of a small amount of sodium alkyl carbonate dissolved in the electrolyte solution on the positive electrode, stablizing the potential of the positive electrode, and the self-discharge and cycling performance of the sodium-ion secondary battery are further improved. When the content of the second additive in the electrolyte solution is less than 0.01%, since the content of the second additive is too low, the passive film formed on an electrolyte solution/positive electrode interface is insufficient to prevent the sodium alkyl carbonate in the electrolyte solution from oxidation reaction on the positive electrode, active sodium is intercalated into the positive electrode material, resulting in the reduction of the potential of the positive electrode, and obvious self-discharge of the battery. When the content of the second additive in the electrolyte solution is too high, more than 5%, an oxidative decomposition product of the second additive is accumulated on the positive electrode, resulting in an increase of a membrane resistance of an interface between the positive electrode and the electrolyte solution, thereby deteriorating the performance of the battery.

In some embodiments, in the electrolyte solution of the present application, the sum of the mass fraction W1 of the first additive in the electrolyte solution and the mass fraction W2 of the second additive in the electrolyte solution is 0.5% to 10.5%, optionally 1% to 10%, additionally optionally 1% to 6%, and further optionally 1% to 3%, wherein a ratio of the mass fraction W1 of the first additive in the electrolyte solution to the mass fraction W2 of the second additive in the electrolyte solution is 1 : (0.01-100), optionally 1 : (0.1-10), also optionally 1 : (0.2-5). Therefore, the self-discharge rate of the sodium-ion secondary battery is further improved.

When W1 + W2 < 0.5%, the self-discharge of the negative electrode or the self-discharge of the positive electrode is too large, and the self-discharge of the battery is obvious; and when W1 + W2 > 10.5%, the interface passive films of the positive electrode and the negative electrode are too thick, resulting in too large interface resistance and poor power performance of the battery.

Optionally, in the electrolyte solution of the present application, the sum of the first additive W1 and the second additive W2 is 1.1% to 3%. Besides, a ratio of the first additive W1 to second additive W2 is within a range of 1 : (0.5-100) or a range of 1 : (1-10), additionally optionally a range of 1 : (0.01-2), further optionally a range of 1 : (0.1-2). The sodium-ion secondary battery has both low direct current internal resistance and self-discharge rate shown in Table 1. By further limiting the range, the component of the electrolyte can be further optimized, such that the electrolyte solution forms stable positive electrode and negative electrode interface passive films with a better conductivity on the surfaces of the positive electrode and negative electrode, and the battery has remarkably improved self-discharge rate and cycling performance, with a good power performance.

In some embodiments, in the electrolyte solution of the present application, the electrolyte sodium salt is selected from one or more of NaPF₆, NaBF₄, NaN(SO₂F)₂ (abbreviated as NaFSI), NaClO₄, NaAsF₆, NaB(C₂O₄)₂ (abbreviated as NaBOB), NaBF₂(C₂O₄) (abbreviated as NaDFOB), NaN(SO₂R_{F})₂, and NaN(SO₂F)(SO₂R_{P}), wherein R_{F} represents C_{b}F_{2b+1}, b is an integer in the range of 1-10, optionally an integer in the range of 1-3, and more optionally, R_{F} is -CF₃, -C₂F₅ or -CF₂CF₂CF₃;
optionally the electrolyte sodium salt is selected from one or more of NaPF₆, NaN(SO₂F)₂, NaN(CF₃SO₂)₂, NaB(C₂O₄)₂, and NaBF₂(C₂O₄); and
more optionally, the electrolyte sodium salt is selected from one or more of NaPF₆, NaN(SO₂F)₂, and NaBF₂(C₂O₄).

In some embodiments, the mass fraction of the electrolyte in the electrolyte solution is 3% to 30%, optionally 5% to 15%.

In some embodiments, in the electrolyte solution of the present application, the organic solvent comprises a carbonate organic solvent. Optionally, the carbonate organic solvent is selected from one or more of ethylene carbonate, propylene carbonate, methyl ethyl carbonate, diethyl carbonate, dimethyl carbonate, dipropyl carbonate, methyl propyl carbonate, ethyl propyl carbonate, and butylene carbonate.

In some embodiments, the mass percentage of the organic solvent in the electrolyte solution is 50% to 97%, optionally, 60% to 90%.

In some embodiments, the organic solvent further comprises one or more of methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, diethyl sulfone, 1,3-dioxolane, tetrahydrofuran, ethylene glycol dimethyl ether, and acetonitrile, which accounts for 0.5% to 50% by mass of the organic solvent, optionally 3% to 30%, also optionally 5% to 20%, and further optionally 8% to 15%.

Therefore, by further limiting the carbonate organic solvent to the above range, the electrolyte sodium salt can be fully dissociated to improve the electrical conductivity of the electrolyte solution, and the ability of participating in film formation can be reduced so as to further improve the self-discharge of the battery.

In some embodiments, in the electrolyte solution of the present application, the sum of the mass fractions of the first, second, and third additives in the electrolyte solution is 2% to 12%, optionally 2.1% to 7%.

In some embodiments, in the electrolyte solution of the present application, a mass fraction ratio of the first, second to third additive in the electrolyte solution is 1 : (1-10) : (0.01-10), optionally 1 : (1-10) : (0.1-5), and also optionally 1 : (1-10) : (1-2).

In some embodiments, in the electrolyte solution of the present application, the sum of the mass fractions of the first, second, and third additives in the electrolyte solution is 2.1% to 4%, and the mass fraction ratio of the first, second, and third additives in the electrolyte solution is 1 : (1-10) : (0.1-2). Therefore, the sodium-ion secondary battery has good direct current internal resistance and capacity retention rate during cycling.

In some embodiments, the electrolyte solution of the present application further comprises a third additive of fluoroethylene carbonate (FEC), wherein the mass fraction of the third additive in the electrolyte solution is 0.01% to 10%, preferably 0.1% to 5%.

Therefore, the toughness of the positive electrode and negative electrode interface passive films can be improved, the tolerance of the interface passive films to the volume expansion and contraction of the positive electrode and negative electrode in a battery cycling process is improved, the cycling performance of the battery is further improved, and meanwhile, the battery also maintains a good power performance. This is because, compared with the third additive of fluoroethylene carbonate (FEC), the first and second additives of the present application are preferentially subjected to reaction on the negative electrode and the positive electrode to form stable positive electrode and negative electrode interface passive films. Therefore, the fluoroethylene carbonate (FEC) has a smaller reaction capability on the positive electrode and the negative electrode, and the power performance of the battery is not deteriorated.

In some embodiments, the electrolyte solution comprises the following components:
a) 0.01% to 5%, optionally 0.1% to 2%, by mass of the first additive;
b) 0.01% to 5%, optionally 0.1% to 2%, by mass of the second additive;
c) 3% to 30%, optionally 5% to 15%, by mass of the electrolyte sodium salt; and
d) 50% to 97%, optionally 60% to 90%, by mass of the carbonate organic solvent,

wherein the sum of the mass fractions of the component a) and the component b) is 0.5% to 10.5%, optionally 1% to 10%, additionally optionally 1% to 6%, and further optionally 1% to 3%; and a mass fraction ratio of the component a) to the component b) is 1 : (0.01-100), optionally 1 : (0.1-10), also optionally 1 : (0.2-5); or
the sum of the mass fractions of the component a) and the component b) is 1.1% to 3%, and the mass fraction ratio of the component a) to the component b) is 1 : (0.5-100), optionally 1 : (1-10), additionally optionally 1 : (0.01-2).

In some embodiments, the electrolyte solution comprises the following components:
a) 0.01% to 5%, optionally 0.1% to 2%, by mass of the first additive;
b) 0.01% to 5%, optionally 0.1% to 2%, by mass of the second additive;
c) 3% to 30%, optionally 5% to 15%, by mass of the electrolyte sodium salt;
d) 50% to 97%, optionally 60% to 90%, by mass of the carbonate organic solvent; and
e) 0.01% to 10%, preferably 0.1% to 5%, by mass of the third additive,

wherein the sum of the mass fractions of the component a), component b), and component e) is 2% to 12%, optionally 2.1% to 7%, and a mass fraction ratio of the component a), component b), to component e) is 1 : (1-10) : (0.01-10), optionally 1 : (1-10) : (0.1-5), also optionally 1 : (1-10) : (1-2); or
the sum of the mass fractions of the component a), component b), and component e) is 2.1% to 4%, and the mass fraction ratio of the component a), component b), to component e) is 1 : (1-10) : (0.1-2).

It should be understood that the electrolyte solution of the present application can be used for a sodium-ion secondary battery, and can also be used for any other battery module, battery pack or power consuming device requiring improvement of the self-discharge rate and cycling performance of the battery.

A second aspect of the present application provides a sodium-ion secondary battery, containing a positive electrode plate, a separator, a negative electrode plate, and an electrolyte solution of the first aspect of the present application.

Typically, a secondary battery comprises a positive electrode plate, a negative electrode plate, an electrolyte and a separator. During the charge/discharge of the battery, active ions are intercalated and deintercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate includes a positive electrode current collector and a positive electrode film layer provided on at least one surface of the positive electrode current collector, the positive electrode film layer including a positive electrode active material.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: a sodium transition metal oxide, a polyanionic compound, and a Prussian blue compound. However, the present application is not limited to these materials, and other well-known conventional materials that can be used as the positive electrode active material for sodium ion batteries may also be used. The weight percentage of the positive electrode active material in the positive electrode film layer is 80-100 wt%, based on the total weight of the positive electrode film layer.

In some embodiments, the transition metal in the sodium transition metal oxide may be at least one of Mn, Fe, Ni, Co, Cr, Cu, Ti, Zn, V, Zr, and Ce. The sodium transition metal oxide is for example NaₓM_{y}O₂, wherein M is one or more of Ti, V, Mn, Co, Ni, Fe, Cr, and Cu, and 0 < x ≤ 1 and 0.5 < y ≤ 1.5. In some embodiments, the positive electrode active material may be Na_{0.88}Cu_{0.24}Fe_{0.29}Mn_{0.47}O₂.

In some embodiments, the polyanionic compound may be a compound having a sodium ion, a transition metal ion, and a tetrahedral (YO₄)ⁿ⁻ anion unit. The transition metal may be at least one of Mn, Fe, Ni, Co, Cr, Cu, Ti, Zn, V, Zr, and Ce. Y may be at least one of P, S, and Si. n represents the valence of (YO₄)ⁿ⁻.

In some embodiments, the polyanionic compound may be a compound having a sodium ion, a transition metal ion, a tetrahedral (YO₄)ⁿ⁻ anion unit, and a halogen anion. The transition metal may be at least one of Mn, Fe, Ni, Co, Cr, Cu, Ti, Zn, V, Zr, and Ce. Y may be at least one of P, S, and Si; n represents the valence of (YO₄)ⁿ⁻; and the halogen may be at least one of F, Cl and Br.

In some embodiments, the polyanionic compound may further be a compound having a sodium ion, a tetrahedral (YO₄)ⁿ⁻ anion unit, a polyhedral unit (ZO_{y})^{m+}, and optionally a halogen anion. Y may be at least one of P, S, and Si; n represents the valence of (YO₄)ⁿ⁻; Z represents a transition metal, and may be at least one of Mn, Fe, Ni, Co, Cr, Cu, Ti, Zn, V, Zr, and Ce; m represents the valence of (ZO_{y})^{m+}; and the halogen may be at least one of F, Cl and Br.

In some embodiments, the polyanionic compound may be, for example, at least one of NaFePO₄, Na₃V₂(PO₄)₃, NaM'PO₄F (M' is one or more of V, Fe, Mn, and Ni), and Na₃(VO_{y})₂(PO₄)₂F_{3-2y} (0 ≤ y ≤ 1).

In some embodiments, the Prussian blue compound may be a compound having a sodium ion, a transition metal ion, and a cyanide ion (CN). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, wherein Me and Me' are each independently at least one of Ni, Cu, Fe, Mn, Co, and Zn, 0 < a ≤ 2, 0 < b < 1, and 0 < c < 1.

In some embodiments, the positive electrode film layer further optionally comprises a binder. As an example, the binder may comprise at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin. The weight percentage of the binder in the positive electrode film layer is 0-20 wt%, based on the total weight of the positive electrode film layer.

In some embodiments, the positive electrode film layer also optionally comprises a conductive agent. As an example, the conductive agent may comprise at least one of superconducting carbon, acetylene black, carbon black, Ketjen black, carbon dots, carbon nanotubes, graphene, and carbon nanofibers. The weight percentage of the conductive agent in the positive electrode film layer is 0-20 wt%, based on the total weight of the positive electrode film layer.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry at an amount of 0.20-0.35 g (dry weight)/1540.25 mm², followed by the procedures such as drying and cold pressing, so as to obtain the positive electrode plate.

### [Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: hard carbon, artificial graphite, natural graphite, soft carbon, a silicon-based material, a tin-based material, lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more. The weight percentage of the negative electrode active material in the negative electrode film layer is 70-100 wt%, based on the total weight of the negative electrode film layer.

In some embodiments, the negative electrode film layer may optionally comprise a binder. The binder may be selected from at least one of a styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight percentage of the binder in the negative electrode film layer is 0-30 wt%, based on the total weight of the negative electrode film layer.

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers. The weight percentage of the conductive agent in the negative electrode film layer is 0-20 wt%, based on the total weight of the negative electrode film layer.

In some embodiments, the negative electrode film layer may optionally comprise other auxiliary agents, such as thickener (e.g. sodium carboxymethyl cellulose (CMC-Na)), etc. The weight percentage of the other auxiliary agents in the negative electrode film layer is 0-15 wt%, based on the total weight of the negative electrode film layer.

In some embodiments, the negative electrode plate can be prepared by dispersing the above-mentioned components for preparing the negative electrode plate, such as negative electrode active material, conductive agent, binder and any other components, in a solvent (e.g., deionized water) to form a negative electrode slurry; and coating the negative electrode current collector with the negative electrode slurry at an amount of 0.10-0.20 g (dry weight)/1540.25 mm², followed by procedures such as drying and cold pressing, so as to obtain the negative electrode plate.

### [Separator]

In some embodiments, the secondary battery further comprises a separator. The separator is provided between the positive electrode plate and the negative electrode plate, and functions for separation. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

### [Outer package]

In some embodiments, the secondary battery may comprise an outer package for encapsulating the positive electrode plate, the negative electrode plate and the electrolyte. As an example, the positive electrode plate, the negative electrode plate and the separator may be laminated or wound to form a laminated or wrapped-structure cell, which is encapsulated within the outer package; and the electrolyte is the electrolyte solution described in the first aspect of the present application, and the electrolyte solution is infiltrated into the cell. The number of the cells in the secondary battery may be one or more, and can be adjusted according to the requirements.

In one embodiment, the present application provides an electrode assembly. In some embodiments, an electrode assembly may be formed by a positive electrode plate, a negative electrode plate and a separator by a winding process or a stacking process. The outer package may be used to encapsulate the above-mentioned electrode assembly and electrolyte.

In some embodiments, the outer package of the secondary battery may be a soft bag, such as a pouch-type soft bag. The material of the soft bag may be a plastic and may include, for example, one or more of polypropylene (PP), polybutylene terephthalate (PBT), polybutylene succinate (PBS), etc. In some embodiments, the outer package of the secondary battery can be a hard housing, for example, a hard plastic housing, an aluminum housing, a steel housing, etc.

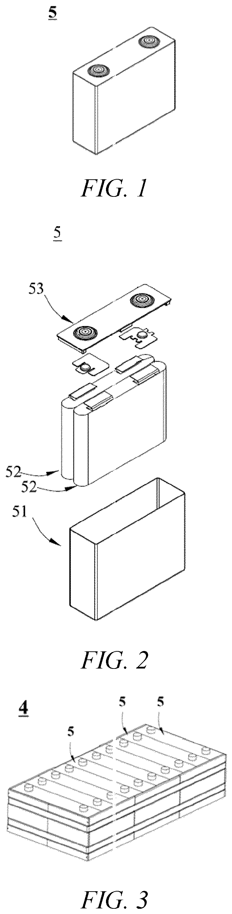

The shape of the secondary battery is not particularly limited in the present application and may be cylindrical, square or of any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

### Power consuming device, battery module or battery pack

In some embodiments, the secondary battery can be assembled into a battery module, and the number of the secondary batteries contained in the battery module may be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

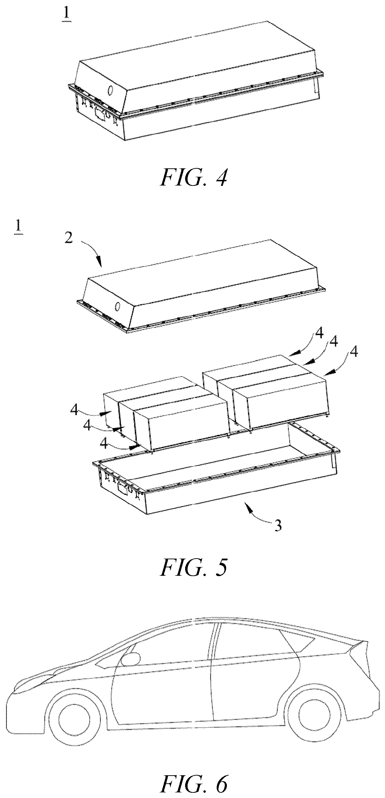

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. Reagents, compounds or instruments for which manufacturers are not specified, are all commonly used conventional products in the art that are commercially available. The content of each component in the examples of the present application is based on the mass without crystal water, unless otherwise stated.

The following descriptive terms: "the electrolyte solution of example 1-1" refers to an electrolyte solution used in the preparation process of the sodium-ion secondary battery of example 1-1; "the positive electrode plate of example 1-1" refers to a positive electrode plate used in the preparation process of the sodium-ion secondary battery of example 1-1; "the negative electrode plate of example 1-1" refers to a negative electrode plate used in the preparation process of the sodium-ion secondary battery of example 1-1; "the separator of example 1-1" refers to a separator used in the preparation process of the sodium-ion secondary battery of example 1-1; and "the sodium-ion secondary battery of example 1-1" refers to a sodium-ion secondary battery prepared from the positive electrode, the separator, the negative electrode, and the electrolyte solution of example 1-1.

The Na_{0.88}Cu_{0.24}Fe_{0.29}Mn_{0.47}O₂ used in the examples of the present application is prepared by referring to patent CN 201910026508.1.

### Example 1

### [Preparation of electrolyte solution]

In an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 98.99 g of the mother solution, 0.01 g of sulfur dioxide, and 1 g of sodium-difluoro(oxalato)borate were taken, fully stirred, and dissolved to obtain an electrolyte solution of the present example.

### [Preparation of positive electrode plate]

An active material Na_{0.88}Cu_{0.24}Fe_{0.29}Mn_{0.47}O₂, a conductive agent of carbon black, a binder of polyvinylidene fluoride (PVDF) were fully stirred and uniformly mixed in an N-methylpyrrolidone solution system at a mass ratio of 90 : 5 : 5 to obtain a positive electrode slurry; the positive electrode slurry was uniformly coated onto a positive electrode current collector of an aluminum foil with a thickness of 13 µm at an amount of 0.28 g (dry weight)/1540.25 mm²; and the aluminum foil was air-dried at room temperature, then transferred to an oven at 120°C for drying for 1 h, followed by cold pressing and slitting to obtain a positive electrode plate.

### [Preparation of negative electrode plate]

An active material of hard carbon, a conductive agent of acetylene black, a binder styrene butadiene rubber (SBR), and a thickener sodium carboxymethyl cellulose (CMC) were fully stirred and uniformly mixed in a deionized water solvent system at a weight ratio of 90 : 4 : 4 : 2 to obtain a negative electrode slurry; the negative electrode slurry was uniformly coated on a negative electrode current collector of an copper foil with a thickness of 13 µm at an amount of 0.14 g (dry weight)/1540.25 mm²; and the copper foil was air-dried at room temperature, then transferred to an oven at 120°C for drying for 1 h, followed by cold pressing and slitting to obtain a negative electrode plate.

### [Separator]

A separator is a porous polyethylene (PE) polymeric film with a thickness of 9 µm.

### [Preparation of sodium-ion secondary battery]

The positive electrode plate, separator, and negative electrode plate were stacked in sequence to enable the separator to function for separation between the positive and negative electrode plates, and then wound to obtain a bare cell; and the bare cell at a capacity of 3 Ah was placed in an outer packaging aluminum-plastic film, 10 g of the prepared electrolyte solution was injected into the dried battery, followed by vacuum packaging, leaving to stand, forming, shaping and other procedures to obtain a sodium-ion secondary battery.

### Examples 2-17

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF6, 25.9 g of ethylene carbonate (EC), and 60.3 g of ethyl methyl carbonate (EMC) were respectively added to a beaker, fully stirred, and dissolved to obtain a mother solution. Then based on the total mass of the electrolyte solution being 100 g and the mass fractions of the first additive and second additive shown in Table 1, a certain mass of the first additive and a certain mass of the second additive were weighed respectively, and the mass of the weighed mother solution was the difference between the total mass of the electrolyte solution being 100 g and the total mass of the first additive and second additive. After the first additive, second additive, and mother solution were fully stirred and dissolved, the electrolyte solution of each example and comparative example was obtained, and the total mass of the electrolyte solution was 100 g.

### Examples 18-23

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then based on the total mass of the electrolyte solution being 100 g and the mass fractions of the first additive, second additive, and third additive shown in Table 1, a certain mass of the first additive, a certain mass of the second additive, and a certain mass of the third additive were weighed respectively, and the mass of the weighed mother solution was the difference between the total mass of the electrolyte solution being 100 g and the total mass of the first additive, second additive, and third additive. After the first additive, second additive, third additive, and mother solution were fully stirred and dissolved, the electrolyte solution of each example was obtained, and the total mass of the electrolyte solution was 100 g.

### Comparative example 1

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain an electrolyte solution used in the present comparative example, and the total mass of the electrolyte solution was 100 g.

### Comparative example 2

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 99.99 g of the mother solution and 0.01 g of 1,3-propane sultone (PS) were taken and fully stirred to be dissolved to obtain an electrolyte solution used in comparative example 2, and the total mass of the electrolyte solution was 100 g.

### Comparative example 3

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 99.99 g of the mother solution and 0.01 g of ethylene sulfate (DTD) were taken and fully stirred to be dissolved to obtain an electrolyte solution used in comparative example 3, and the total mass of the electrolyte solution was 100 g.

### Comparative example 4

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 99.99 g of the mother solution and 0.01 g of sulfur dioxide (SO₂) were taken and fully stirred to be dissolved to obtain an electrolyte solution used in comparative example 4, and the total mass of the electrolyte solution was 100 g.

### Comparative example 5

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 99.99 g of the mother solution and 0.01 g of lithium bis(oxalato)borate were taken and fully stirred to be dissolved to obtain an electrolyte solution used in comparative example 5, and the total mass of the electrolyte solution was 100 g.

### Comparative example 6

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 99.99 g of the mother solution and 0.01 g of sodium-difluoro(oxalato)borate were taken and fully stirred to be dissolved to obtain an electrolyte solution used in comparative example 6, and the total mass of the electrolyte solution was 100 g. Comparative example 7

A sodium-ion secondary battery was prepared by referring to example 1 as a whole except that the electrolyte solution was prepared by the following steps: in an argon atmosphere glove box with a water content (H₂O) < 10 ppm and an oxygen content (O₂) < 0.1 ppm, 13.8 g of NaPF₆, 25.9 g of ethylene carbonate (EC), and 60.3 g of ethyl methyl carbonate (EMC) were respectively added to a beaker, fully stirred, and dissolved to obtain a mother solution. Then 99.99 g of the mother solution and 0.01 g of fluoroethylene carbonate (FEC) were taken and fully stirred to be dissolved to obtain an electrolyte solution used in comparative example 7, and the total mass of the electrolyte solution was 100 g.

### [Test of relevant parameters and battery performances]

### 1. Test of self-discharge of sodium-ion secondary battery

At 25°C, the sodium-ion secondary batteries prepared in the examples and comparative examples were kept still for 5 minutes, subjected to a constant-current charging to 4.2 V at a rate of 1 C, then subjected to a constant-voltage charging until a current is less than or equal to 0.05 C, kept still for 5 minutes, and then subjected to a constant-current discharging to 3.7 V at a rate of 0.1 C. The batteries were kept still for 24 h, voltage V1 was tested, and then the batteries were kept still for 48 h, and V2 was tested. Self-discharge rate of cell K = (V1 - V2)/48.

The sodium-ion secondary batteries of examples 1-17 and comparative examples 1-6 were respectively tested according to the above processes, and the specific values were shown in Table 1.

### 2. Test of cycling performance at normal temperature of sodium-ion secondary battery

At 25°C, the sodium-ion secondary batteries prepared in the examples and comparative examples were kept still for 5 minutes, subjected to a constant-current charging to 4.2 V at a rate of 1 C, then subjected to a constant-voltage charging until a current is less than or equal to 0.05 C, kept still for 5 minutes, and then subjected to a constant-current discharging to 2.0 V at a rate of 1 C, which was a charging and discharging cycle. The discharging capacity was recorded as the discharging capacity of the 1st cycle of the sodium-ion secondary batteries. The sodium-ion secondary batteries were subjected to a test of 800 cycles of charging and discharging according to the above method, and the discharging capacity of each cycle was recorded.

Capacity retention rate of sodium-ion secondary battery after 800 cycles at 25°C and 1C/1C (%) = discharging capacity of 800th cycle/discharging capacity of 1st cycle × 100%.

The sodium-ion secondary batteries of example 3, and 18-23 and comparative example 7 were respectively tested according to the above processes, and the specific values were shown in Table 1.

### 3. Test of direct current internal resistance (DCR) of sodium-ion secondary battery

At 25°C, the sodium-ion secondary battery was kept still for 5 minutes, subjected to a constant-current charging to 4.2 V at a rate of 1 C, then subjected to a constant-voltage charging until a current is less than or equal to 0.05 C, the state of charge (SOC) of the battery at the time was 100%, and then the battery was kept still for 5 minutes, subjected to a constant-current discharging at a rate of 1 C, and the SOC of the sodium-ion secondary battery was adjusted to 50%.

The sodium-ion secondary battery with 50% SOC was continuously kept still for 10 minutes and subjected to a constant-current discharging at a rate of 4 C for 30 seconds. Voltage U1 at the last 1 second of the keeping still, voltage U2 at the last 1 second of the constant-current discharging at a rate of 4 C, and current I of the constant-current discharging at a rate of 4 C were recorded.

Direct current internal resistance of sodium-ion secondary battery at 25°C, 50% SOC, and constant-current discharging at a rate of 4 C for 30 s = (U2 - U1)/I.

The sodium-ion secondary batteries of the examples and comparative examples were respectively tested according to the above processes, and the specific values were shown in Table 1-Table 2.

In Table 1-Table 2, the mass fraction of the first additive in the electrolyte solution was W1 and the mass fraction of the second additive in the electrolyte solution was W2, based on the total weight of the electrolyte solution. In the tables, the symbol "/" indicated that the substance was not present in the electrolyte solution and the mass fraction was 0.

**Table 1: Effect of first additive and second additive on performance of sodium-ion secondary batteries**

| Example No. | First additive | | Second additive | | Direct current internal resistance (mΩ) | Self-discharge rate (mV/h) |
|---|---|---|---|---|---|---|
| | Type | Mass fraction W1 | Type | Mass fraction W2 | | |
| Comparative example 1 | / | / | / | / | 352 | 0.157 |
| Comparative example 2 | PS | 1 | / | / | 591 | 0.126 |
| Comparative example 3 | DTD | 1 | / | / | 645 | 0.097 |
| Comparative example 4 | SO₂ | 1 | / | / | 360 | 0.087 |
| Comparative example 5 | / | / | Lithium bis(oxalato) borate | 1 | 358 | 0.115 |
| Comparative example 6 | / | / | Sodium-difluoro(oxa lato)borate | 1 | 363 | 0.103 |
| Example 1 | SO₂ | 0.01 | Sodium-difluoro(oxa lato)borate | 1 | 368 | 0.083 |
| Example 2 | SO₂ | 0.1 | Sodium-difluoro(oxa lato)borate | 1 | 370 | 0.062 |
| Example 3 | SO₂ | 1 | Sodium-difluoro(oxa lato)borate | 1 | 378 | 0.049 |
| Example 4 | SO₂ | 2 | Sodium-difluoro(oxa lato)borate | 1 | 393 | 0.035 |
| Example 5 | SO₂ | 5 | Sodium-difluoro(oxa lato)borate | 1 | 437 | 0.032 |
| Example 6 | SO₂ | 1 | Sodium-difluoro(oxa lato)borate | 0.01 | 361 | 0.076 |
| Example 7 | SO₂ | 1 | Sodium-difluoro(oxa lato)borate | 0.1 | 369 | 0.067 |
| Example 8 | SO₂ | 1 | Sodium-difluoro(oxa lato)borate | 2 | 398 | 0.041 |
| Example 9 | SO₂ | 1 | Sodium-difluoro(oxa lato)borate | 5 | 455 | 0.039 |
| Example 10 | SO₂ | 2 | Sodium-difluoro(oxa lato)borate | 1.5 | 428 | 0.033 |
| Example 11 | SO₂ | 5 | Sodium-difluoro(oxa lato)borate | 5 | 592 | 0.028 |
| Example 12 | SO₂F₂ | 1 | Lithium oxalate | 1 | 381 | 0.055 |
| Example 13 | SF₄ | 1 | Potassium difluorobis( oxalato)pho sphate | 1 | 384 | 0.052 |
| Example 14 | SF₆ | 1 | Sodium tetrafluoro( oxalate)pho sphate | 1 | 375 | 0.055 |
| Example 15 | CS₂ | 1 | Dimethyl oxalate | 1 | 378 | 0.058 |
| Example 16 | SO₃ | 1 | 1,4-dioxacycloh exan-2,3-dione | 1 | 374 | 0.051 |
| Example 17 | SO₂ | 1 | Sodium-difluoro (oxalato)bor ate | 1 | 385 | 0.050 |

It can be seen from Table 1, compared with the batteries of comparative examples 1-6, wherein conventional sulfur-containing compounds 1,3-propane sultone (PS) and ethylene sulfate (DTD) were used in comparative examples 2 and 3, and the single additive (a low-boiling-point sulfur-containing compound (sulfur dioxide), an oxalate-containing salt, and an oxalate ester) was used in comparative examples 4-6, the sodium-ion secondary batteries corresponding to the examples of the present application, comprising the electrolyte solution containing 0.01% to 5% by mass fraction of the first additive and 0.01% to 5% by mass fraction of the second additive, all had good direct current internal resistance and significantly improved self-discharge rate.

It can be seen by comparing examples 1-17 of the present application, the sum of the first additive W1 and second additive W2 was 1.1% to 3%. Besides, a ratio of the first additive W1 to second additive W2 was within a range of 1 : (0.5-100) or a range of 1 : (1-10), additionally optionally a range of 1 : (0.01-2), further optionally a range of 1 : (0.1-2). The sodium-ion secondary battery had both low direct current internal resistance and self-discharge rate. However, when the content of the first additive or second additive was small (as shown in example 1 and example 6), the self-discharge rate was large. When the contents of the first additive and the second additive were both large (shown in example 11), since the film formed at an interface of a positive electrode and a negative electrode was too thick, the direct current internal resistance was large.

**Table 2: Effect of third additive on performances of sodium-ion secondary batteries**

| Example No. | First additive | | Second additive | | Third additive (FEC) | Direct current internal resistance (mΩ) | Capacity retention rate during cycling |
|---|---|---|---|---|---|---|---|
| | Type | Mass fraction % (W1) | Type | Mass fraction % (W2) | Mass fraction % (W3) | | |
| Comparative example 7 | / | / | / | / | 1 | 529 | 79% |
| Example 3 | SO₂ | 1 | Sodium-difluoro(oxa lato)borate | 1 | / | 378 | 87% |
| Example 18 | SO₂ | 1 | Sodium-difluoro(oxa lato)borate | 1 | 0.01 | 380 | 89% |
| Example 19 | SO₂ | 1 | Sodium-difluoro(oxa lato)borate | 1 | 0.1 | 385 | 91% |
| Example 20 | SO₂ | 1 | Sodium-difluoro(oxa lato)borate | 1 | 1 | 388 | 92% |
| Example 21 | SO₂ | 1 | Sodium-difluoro(oxa lato)borate | 1 | 2 | 391 | 93% |
| Example 22 | SO₂ | 1 | Sodium-difluoro(oxa lato)borate | 1 | 5 | 413 | 91% |
| Example 23 | SO₂ | 1 | Sodium-difluoro(oxa lato)borate | 1 | 10 | 512 | 86% |

It can be seen from Table 2, compared with comparative example 7 (an electrolyte solution not comprising third additive of fluoroethylene carbonate), when the electrolyte solution comprised the first and second additives, the capacity retention rate during cycling of the sodium-ion secondary battery was improved (example 3), and when the electrolyte solution comprised the first, second and third additives (fluoroethylene carbonate), the cycling performance of the sodium-ion secondary batteries were significantly improved (e.g., examples 18 to 23), and the capacity retention rate during cycling can reach 93%.

## Claims

1. An electrolyte solution, **characterized in that** the electrolyte solution comprises an electrolyte sodium salt, an organic solvent, and additives, wherein the additives include:
a) a first additive selected from at least one of sulfur-containing compounds having a boiling point less than or equal to 70°C; and
b) a second additive selected from at least one of an oxalate-containing salt or an oxalate ester,
wherein the oxalate-containing salt is selected from at least one of the following: bis(oxalato)borate (C₄O₈B)ₙ(Mⁿ⁺), difluoro(oxalato)borate (C₂O₄F₂B)ₙ(Mⁿ⁺), difluorobis(oxalato)phosphate (C₂O₈F₂P)ₙ(Mⁿ⁺), tetrafluorobis(oxalato)phosphate (C₂O₄F₄P)ₙ(Mⁿ⁺), ethyl oxalate (C₂O₄C₂H₅)ₙ(Mⁿ⁺), and oxalate (C₂O₄)_{n/2}(Mⁿ⁺); Mⁿ⁺ is a metal cation and/or an organic cation, optionally an alkali metal ion, an alkaline earth metal ion, an aluminum ion or an ammonium ion NH₄⁺, additionally optionally a sodium ion, a lithium ion, a potassium ion, a magnesium ion or an aluminum ion, further optionally a sodium ion, a lithium ion, and a potassium ion; n is 1, 2 or 3, optionally 1 or 2;
the oxalate ester is at least one of the following compounds of formula (I) and formula (II), 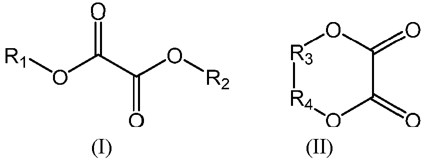
wherein R₁ and R₂ are each independently selected from C₁-C₁₀ alkyl, C₂-C₁₀ alkenyl, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkyleneoxyphenyl or C₁-C₁₀ alkylsulfonyl, wherein the C₁-C₁₀ alkyl, C₂-C₁₀ alkenyl, C₁-C₁₀ alkylenephenyl, C₁-C₁₀ alkylenecarboxyl, C₁-C₁₀ alkylcarbonyl, C₂-C₁₀ alkyleneamino, C₁-C₁₀ alkyleneoxyphenyl or C₁-C₁₀ alkylsulfonyl, optionally substituted with one or more substituents selected from a halogen atom, sulfo or nitro; optionally, R₁ and R₂ are each independently selected from C₁-C₄ alkyl;
the halogen atom is selected from one or more of F, Cl, and Br; and
R₃ and R₄ together form C₁-C₂₀ alkylene or C₂-C₁₀ alkenylene, and the C₁-C₂₀ alkylene and C₂-C₁₀ alkenylene are optionally substituted with one or more substituents selected from the following: a halogen atom, nitro, amino, carboxyl, sulfo, C₁-C₁₀ alkylcarbonyl, C₁-C₁₀ alkylsulfonyl, phenyl, C₁-C₁₀ alkylenephenyl, C₁-C₁₀ alkyleneoxyphenyl, C₁-C₁₀ alkylenecarboxyl, and C₁-C₁₀ alkylenesulfo; and optionally, R₃ and R₄ together form -(CH₂)ₘ-, wherein m is an integer of 2-15.

2. The electrolyte solution according to claim 1, **characterized in that** the oxalate-containing salt in the second additive is selected from lithium bis(oxalato)borate, sodium difluoro(oxalato)borate, lithium oxalate, lithium difluorobis(oxalato)phosphate, and sodium tetrafluoro(oxalate)phosphate, or a mixture thereof;
the compound of formula (I) is selected from dimethyl oxalate, diethyl oxalate, diphenyl oxalate, and diallyl oxalate, or a mixture thereof; and
the compound of formula (II) is 1,4-dioxacyclohexan-2,3-dione and/or 1,4-dioxacycloheptadecan-2,3-dione.

3. The electrolyte solution according to claim 1 or 2, **characterized in that** the first additive is selected from sulfur hexafluoride, sulfur tetrafluoride, sulfuryl fluoride, sulfur dioxide, sulfur trioxide, carbon disulfide, dimethyl sulfide, methyl ethyl sulfide, sulfur monofluoride, sulfur difluoride, thionyl fluoride, and thionyl tetrafluoride or a mixture thereof, optionally sulfur hexafluoride, sulfur tetrafluoride, sulfuryl fluoride, sulfur dioxide, sulfur trioxide, and carbon disulfide or a mixture thereof.

4. The electrolyte solution according to any one of claims 1-3, **characterized in that** the mass fraction W1 of the first additive in the electrolyte solution is 0.01% to 5%, optionally 0.1% to 2%, based on the total mass of the electrolyte solution.

5. The electrolyte solution according to any one of claims 1-4, **characterized in that** the first additive has a molecular weight of 50 g/mol to 200 g/mol.

6. The electrolyte solution according to any one of claims 1-5, **characterized in that** the mass fraction W2 of the second additive in the electrolyte solution is 0.01% to 5%, optionally 0.1% to 2%, based on the total mass of the electrolyte solution.

7. The electrolyte solution according to any one of claims 1-6, **characterized in that** the sum of the mass fractions of the first additive and the second additive is 0.5% to 10.5%, optionally 1% to 10%, also additionally optionally 1% to 6%, and further optionally 1% to 3%, based on the total mass of the electrolyte solution.

8. The electrolyte solution according to claim 7. **characterized in that** a ratio of the mass fraction W1 of the first additive in the electrolyte solution to the mass fraction W2 of the second additive in the electrolyte solution is 1 : (0.01-100), optionally 1 : (0.1-10) and additionally optionally 1 : (0.2-5).

9. The electrolyte solution according to any one of claims 1-8, wherein the electrolyte sodium salt is selected from one or more of NaPF₆, NaBF₄, NaN(SO₂F)₂, NaClO₄, NaAsF₆, NaB(C₂O₄)₂, NaBF₂(C₂O₄), NaN(SO₂R_{F})₂, and NaN(SO₂F)(SO₂R_{F}), wherein R_{F} represents C_{b}F_{2b+1}, b is an integer in the range of 1-10, optionally an integer in the range of 1-3, and more optionally, R_{F} is -CF₃, -C₂F₅ or -CF₂CF₂CF₃.

10. The electrolyte solution according to any one of claims 1-9, wherein the organic solvent comprises a carbonate organic solvent, wherein the carbonate organic solvent is selected from one or more of ethylene carbonate, propylene carbonate, methyl ethyl carbonate, diethyl carbonate, dimethyl carbonate, dipropyl carbonate, methyl propyl carbonate, ethyl propyl carbonate, and butylene carbonate.

11. The electrolyte solution according to any one of claims 1-10, wherein the electrolyte solution further comprises a third additive of fluoroethylene carbonate (FEC), wherein the mass fraction of the third additive in the electrolyte solution is 0.01% to 10%, preferably 0.1% to 5%.

12. A sodium-ion secondary battery, comprising a positive electrode plate, a separator, a negative electrode plate, and the electrolyte solution according to any one of claims 1-11.

13. A battery module (4), comprising a sodium-ion secondary battery according to claim 12.

14. A battery pack (1), comprising a battery module (4) according to claim 13.

15. A power consuming device, comprising at least one selected from a sodium-ion secondary battery according to claim 12, a battery module (4) according to claim 13 or a battery pack (1) according to claim 14.

## Patentansprüche

1. Elektrolytlösung, **dadurch gekennzeichnet, dass** die Elektrolytlösung ein Elektrolytnatriumsalz, ein organisches Lösungsmittel und Zusatzstoffe umfasst, wobei die Zusatzstoffe Folgendes einschließen:
a) einen ersten Zusatzstoff, der aus mindestens einer von schwefelhaltigen Verbindungen mit einem Siedepunkt von weniger als oder gleich 70 °C ausgewählt ist; und
b) einen zweiten Zusatzstoff, der aus mindestens einem eines oxalathaltigen Salzes oder eines Oxalatesters ausgewählt ist,
wobei das oxalathaltige Salz aus mindestens einem der Folgenden ausgewählt ist: Bis(oxalato)borat (C₄O₈B)ₙ/Mⁿ⁺), Difluor(oxalato)borat (C₂O₄F₂B)ₙ(Mⁿ⁺), Difluorbis(oxalato)phosphat (C₂O₈F₂P)ₙ(Mⁿ⁺), Tetrafluorbis(oxalato)phosphat (C₂O₄F₄P)ₙ(Mⁿ⁺), Ethyloxalat (C₂O₄C₂H₅)ₙ(Mⁿ⁺), und Oxalat (C₂O₄)_{n/2}(Mⁿ⁺); Mⁿ⁺ ein Metallkation und/oder ein organisches Kation, optional ein Alkalimetallion, ein Alkalinerdmetallion, ein Aluminiumion oder ein Ammoniakion NH₄⁺, zusätzlich optional ein Natriumion, ein Lithiumion, ein Kaliumion, ein Magnesiumion oder ein Aluminiumion, weiter optional ein Natriumion, ein Lithiumion und ein Kaliumion ist; n 1, 2 oder 3, optional 1 oder 2, ist;
das Oxalatester mindestens eine der folgenden Verbindungen der Formel (I) und der Formel (II) ist, 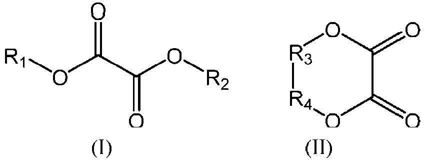
wobei R₁ und R₂ jeweils unabhängig aus C₁-C₁₀-Alkyl, C₂₋C₁₀-Alkenyl, C₁-C₁₀-Alkylenphenyl, C₁-C₁₀-Alkylencarboxyl, C₁-C₁₀-Alkylcarbonyl, C₂-C₁₀-Alkylenamino, C₁-C₁₀-Alkylenoxyphenyl oder C₁-C₁₀-Alkylsulfonyl ausgewählt sind, wobei das C₁-C₁₀-Alkyl, das C₂-C₁₀-Alkenyl, das C₁-C₁₀-Alkylenphenyl, das C₁-C₁₀-Alkylencarboxyl, das C₁-C₁₀-Alkylcarbonyl, das C₂-C₁₀-Alkylenamino, das C₁-C₁₀-Alkylenoxyphenyl oder das C₁-C₁₀-Alkylsulfonyl optional durch einen oder mehrere Substituenten substituiert sind, die aus einem Halogenatom, Sulfo oder Nitro ausgewählt sind, wobei optional R₁ und R₂ jeweils unabhängig aus C₁-C₄-Alkyl ausgewählt sind;
das Halogenatom aus einem oder mehreren von F, Cl und Br ausgewählt ist; und
R₃ und R₄ zusammen ein C₁-C₂₀-Alkylen oder C₂-C₁₀-Alkenylen bilden, und das C₁-C₂₀-Alkylen und das C₂-C₁₀-Alkenylen optional durch einen oder mehrere Substituenten substituiert sind, die aus Folgendem ausgewählt sind: einem Halogenatom, Nitro, Amino, Carboxyl, Sulfo, C₁-C₁₀-Alkylcarbonyl, C₁-C₁₀-Alkylsulfonyl, Phenyl, C₁-C₁₀-Alkylenphenyl, C₁-C₁₀-Alkylenoxyphenyl, C₁-C₁₀-Alkylencarboxyl und C₁-C₁₀-Alkylensulfo; und optional R₃ und R₄ zusammen -(CH₂)ₘ- bilden, wobei m eine ganze Zahl von 2-15 ist.

2. Elektrolytlösung nach Anspruch 1, **dadurch gekennzeichnet, dass** das oxalathaltige Salz in dem zweiten Zusatzstoff aus Lithiumbis(oxalato)borat, Natriumdifluor(oxalato)borat, Lithiumoxalat, Lithiumdifluorbis(oxalato)phosphat und Natriumtetrafluor(oxalato)phosphat oder einer Mischung davon ausgewählt ist;
die Verbindung der Formel (I) aus Dimethyloxalat, Diethyloxalat, Diphenyloxalat und Diallyloxalat oder einer Mischung davon ausgewählt ist; und
die Verbindung der Formel (II) 1,4-Dioxacyclohexan-2,3-dion und/oder 1,4-Dioxacycloheptadecan-2,3-dion ist.

3. Elektrolytlösung nach Anspruch 1 oder 2, **dadurch gekennzeichnet, dass** der erste Zusatzstoff aus Schwefelhexafluorid, Schwefeltetrafluorid, Sulfurylfluorid, Schwefeldioxid, Schwefeltrioxid, Kohlenstoffdisulfid, Dimethylsulfid, Methylethylsulfid, Schwefelmonofluorid, Schwefeldifluorid, Thionylfluorid und Thionyltetrafluorid oder einer Mischung davon, optional Schwefelhexafluorid, Schwefeltetrafluorid, Sulfurylfluorid, Schwefeldioxid, Schwefeltrioxid und Kohlenstoffdisulfid oder einer Mischung davon ausgewählt ist.

4. Elektrolytlösung nach einem der Ansprüche 1-3, **dadurch gekennzeichnet, dass** der Massenanteil W1 des ersten Zusatzstoffs in der Elektrolytlösung 0,01 % bis 5 %, optional 0,1 % bis 2 %, basierend auf der Gesamtmasse der Elektrolytlösung beträgt.

5. Elektrolytlösung nach einem der Ansprüche 1-4, **dadurch gekennzeichnet, dass** der erste Zusatzstoff ein Molekulargewicht von 50 g/mol bis 200 g/mol aufweist.

6. Elektrolytlösung nach einem der Ansprüche 1-5, **dadurch gekennzeichnet, dass** der Massenanteil W2 des zweiten Zusatzstoffs in der Elektrolytlösung 0,01 % bis 5 %, optional 0,1 % bis 2 %, basierend auf der Gesamtmasse der Elektrolytlösung beträgt.

7. Elektrolytlösung nach einem der Ansprüche 1-6, **dadurch gekennzeichnet, dass** die Summe der Massenanteile des ersten Zusatzstoffs und des zweiten Zusatzstoffs 0,5 % bis 10,5 %, optional 1 % bis 10 %, auch zusätzlich optional 1 % bis 6 %, und weiter optional 1 % bis 3 %, basierend auf der Gesamtmasse der Elektrolytlösung beträgt.

8. Elektrolytlösung nach Anspruch 7, **dadurch gekennzeichnet, dass** ein Verhältnis des Massenanteils W1 des ersten Zusatzstoffs in der Elektrolytlösung zu dem Massenanteil W2 des zweiten Zusatzstoffs in der Elektrolytlösung 1 : (0,01-100), optional 1 : (0,1-10) und zusätzlich optional 1 : (0,2-5) beträgt.

9. Elektrolytlösung nach einem der Ansprüche 1-8, wobei das Elektrolytnatriumsalz aus einem oder mehreren von NaPF₆, NaBF₄, NaN(SO₂F)₂, NaClO₄, NaAsF₆, NaB(C₂O₄)₂, NaBF₂(C₂O₄), NaN(SO₂R_{F})₂ und NaN(SO₂F)(SO₂R_{F}) ausgewählt ist, wobei R_{F} C_{b}F_{2b+1} darstellt, b eine ganze Zahl im Bereich von 1-10, optional eine ganze Zahl im Bereich von 1-3 ist, und optionaler R_{F} -CF₃, -C₂F₅ oder -CF₂CF₂CF₃ ist.

10. Elektrolytlösung nach einem der Ansprüche 1-9, wobei das organische Lösungsmittel ein organisches Carbonatlösungsmittel umfasst, wobei das organische Carbonatlösungsmittel aus einem oder mehreren von Ethylencarbonat, Propylencarbonat, Methylethylcarbonat, Diethylcarbonat, Dimethylcarbonat, Dipropylcarbonat, Methylpropylcarbonat, Ethylpropylcarbonat und Butylencarbonat ausgewählt ist.

11. Elektrolytlösung nach einem der Ansprüche 1-10, wobei die Elektrolytlösung ferner einen dritten Zusatzstoff von Fluorethylencarbonat (FEC) umfasst, wobei der Massenanteil des dritten Zusatzstoffs in der Elektrolytlösung 0,01 % bis 10 %, vorzugsweise 0,1 % bis 5 %, beträgt.

12. Natriumionensekundärbatterie, umfassend eine positive Elektrodenplatte, einen Separator, eine negative Elektrodenplatte und die Elektrolytlösung nach einem der Ansprüche 1-11.

13. Batteriemodul (4), umfassend eine Natriumionensekundärbatterie nach Anspruch 12.

14. Batteriepack (1), umfassend ein Batteriemodul (4) nach Anspruch 13.

15. Stromverbrauchende Vorrichtung, umfassend eine Natriumionensekundärbatterie nach Anspruch 12 und/oder ein Batteriemodul (4) nach Anspruch 13 und/oder ein Batteriepack (1) nach Anspruch 14.

## Revendications

1. Solution électrolytique, **caractérisée en ce que** la solution électrolytique comprend un sel de sodium d'électrolyte, un solvant organique, et des additifs, dans laquelle les additifs incluent :
a) un premier additif choisi parmi au moins l'un de composés contenant du soufre ayant un point d'ébullition inférieur ou égal à 70°C ; et
b) un deuxième additif choisi parmi au moins l'un d'un sel contenant de l'oxalate ou d'un ester d'oxalate,
dans laquelle le sel contenant de l'oxalate est choisi parmi au moins l'un des éléments suivants : bis(oxalato)borate (C₄O₈B)ₙ(Mⁿ⁺), difluoro(oxalato)borate (C₂O₄F₂B)ₙ(Mⁿ⁺), difluorobis(oxalato)phosphate (C₂O₈F₂P)ₙ(Mⁿ⁺),
tétrafluorobis(oxalato)phosphate (C₂O₄F₄P)ₙ(Mⁿ⁺), oxalate d'éthyle (C₂O₄C₂H₅)ₙ(Mⁿ⁺), et oxalate (C₂O₄)_{n/2}(Mⁿ⁺) ; Mⁿ⁺ est un cation métallique et/ou un cation organique, optionnellement un ion métallique alcalin, un ion métallique alcalino-terreux, un ion aluminium ou un ion ammonium NH₄⁺, optionnellement en plus un ion sodium, un ion lithium, un ion potassium, un ion magnésium ou un ion aluminium, optionnellement encore un ion sodium, un ion lithium, et un ion potassium ; n est 1, 2 ou 3, optionnellement 1 ou 2 ;
l'ester d'oxalate est au moins l'un des composés suivants de la formule (I) et de la formule (II), 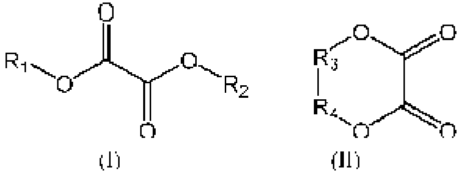
dans laquelle R₁ et R₂ sont chacun indépendamment choisis parmi u alkyle en C₁-C₁₀, alcényle en C₂-C₁₀, alkylènephényle en C₁-C₁₀, alkylènecarboxyle en C₁-C₁₀, alkylcarbonyle en C₁-C₁₀, alkylèneamino en C₂-C₁₀, alkyèneoxyphényle en C₁-C₁₀ ou alkylsulfonyle en C₁-C₁₀, dans laquelle l'alkyle en C₁-C₁₀, alcényle en C₂-C₁₀, alkylènephényle en C₁-C₁₀, alkylènecarboxyle en C₁-C₁₀, alkylcarbonyle en C₁-C₁₀, alkylèneamino en C₂-C₁₀, alkyèneoxyphényle en C₁-C₁₀ ou alkylsulfonyle en C₁-C₁₀ sont optionnellement substitués par un ou plusieurs substituants choisis parmi un atome d'halogène, sulfo ou nitro ; optionnellement, R₁ et R₂ sont chacun indépendamment choisis parmi l'alkyle en C₁-C₄ ;
l'atome d'halogène est choisi parmi l'un ou plusieurs de F, C1 et Br ; et
R₃ et R₄ forment ensemble un alkylène en C₁-C₂₀ ou alkénylène en C₂-C₁₀, et l'alkylène en C₁-C₂₀ et alkénylène en C₂-C₁₀ sont optionnellement substitués par un ou plusieurs substituants choisis parmi les suivants : un atome d'halogène, nitro, amino, carboxyle, sulfo, alkylcarbonyle en C₁-C₁₀, alkylsulfonyle en C₁-C₁₀, phényle, alkylènephényle en C₁-C₁₀, alkylèneoxyphényle en C₁-C₁₀, alkylènecarboxyle en C₁-C₁₀, et alkylènesulfo en C₁-C₁₀ ; et optionnellement, R₃ et R₄ forment ensemble -(CH₂)ₘ-, dans laquelle m est un entier de 2 à 15.

2. Solution électrolytique selon la revendication 1, **caractérisée en ce que** le sel contenant de l'oxalate dans le deuxième additif est choisi parmi le bis(oxalato)borate de lithium, difluoro(oxalato)borate de sodium, oxalate de lithium, difluorobis(oxalato)phosphate de lithium, et tétrafluoro(oxalate)phosphate de sodium, ou un mélange de ceux-ci ;
le composé de formule (I) est choisi parmi l'oxalate de diméthyle, oxalate de diéthyle, oxalate de diphényle, et oxalate de diallyle, ou un mélange de ceux-ci ; et
le composé de formule (II) est de la 1,4-dioxacyclohénaxe-2,3-dione et/ou 1,4-dioxacycloheptadécane-2,3-dione.

3. Solution électrolytique selon la revendication 1 ou 2, **caractérisée en ce que** le premier additif est choisi parmi l'hexafluorure de soufre, tétrafluorure de soufre, fluorure de sulfuryle, dioxyde de soufre, trioxyde de soufre, disulfure de carbone, sulfure de diméthyle, sulfure de méthyléthyle, monofluorure de soufre, difluorure de soufre, fluorure de thionyle, et tétrafluorure de thionyle ou un mélange de ceux-ci, optionnellement l'hexaflurore de soufre, tétrafluorure de soufre, fluorure de sulfuryle, dioxyde de soufre, trioxyde de soufre, et disulfure de carbone ou un mélange de ceux-ci.

4. Solution électrolytique selon l'une quelconque des revendications 1 à 3, **caractérisée en ce que** la fraction en masse W1 du premier additif dans la solution électrolytique est de 0,01 % à 5 %, optionnellement de 0,1 à 2 %, sur la base de la masse totale de la solution électrolytique.

5. Solution électrolytique selon l'une quelconque des revendications 1 à 4, **caractérisée en ce que** le premier additif présente un poids moléculaire de 50 g/mol à 200 g/mol.

6. Solution électrolytique selon l'une quelconque des revendications 1 à 5, **caractérisée en ce que** la fraction en masse W2 du deuxième additif dans la solution électrolytique est de 0,01 % à 5 %, optionnellement de 0,1 à 2 %, sur la base de la masse totale de la solution électrolytique.

7. Solution électrolytique selon l'une quelconque des revendications 1 à 6, **caractérisée en ce que** la somme des fractions en masse du premier additif et du deuxième additif est de 0,5 % à 10,5 %, optionnellement de 1 % à 10 %, aussi optionnellement en plus de 1 % à 6 %, et encore optionnellement de 1 % à 3 % sur la base de la masse totale de la solution électrolytique.

8. Solution électrolytique selon la revendication 7, **caractérisée en ce qu'**un rapport entre la fraction en masse W1 du premier additif dans la solution électrolytique et la fraction en masse W2 du deuxième additif dans la solution électrolytique est de 1 : (0,01-100), optionnellement de 1 : (0,1-10) et optionnellement en plus de 1 : (0,2-5).

9. Solution électrolytique selon l'une quelconque des revendications 1 à 8, dans laquelle le sel de sodium d'électrolyte est choisi parmi l'un ou plusieurs de NaPF₆, NaBF₄, NaN(SO₂F)₂, NaClO₄, NaAsF₆, NaB(C₂O₄)₂, NaBF₂(C₂O₄), NaN(SO₂R_{F})₂, et NaN(SO₂F)(SO₂R₁), dans laquelle R_{F} représente C_{b}F_{2b+1}, b est un entier dans la plage de 1 à 10, optionnellement un entier dans la plage de 1 à 3, et plus optionnellement R_{F} est -CF₃, -C₂F₅ ou -CF₂CF₂CF₃.

10. Solution électrolytique selon l'une quelconque des revendications 1 à 9, dans laquelle le solvant organique comprend un solvant organique de carbonate, dans laquelle le solvant organique de carbonate est choisi parmi l'un ou plusieurs de carbonate d'éthylène, carbonate de propylène, carbonate de méthyléthyle, carbonate de diéthyle, carbonate de diméthyle, carbonate de dipropyle, carbonate de méthylpropyle, carbonate d'éthylpropyle, et carbonate de butylène.

11. Solution électrolytique selon l'une quelconque des revendications 1 à 10, dans laquelle la solution électrolytique comprend en outre un troisième additif de carbonate de fluoroéthylène (FEC), dans laquelle la fraction en masse du troisième additif dans la solution électrolytique est de 0,01 % à 10 %, de préférence de 0,1 % à 5 %.

12. Batterie secondaire au sodium-ion, comprenant une plaque d'électrode positive, un séparateur, une plaque d'électrode négative, et la solution électrolytique selon l'une quelconque des revendications 1 à 11.

13. Module de batterie (4), comprenant une batterie secondaire au sodium-ion selon la revendication 12.

14. Bloc-batterie (1), comprenant un module de batterie (4) selon la revendication 13.

15. Dispositif consommateur d'énergie, comprenant au moins un élément choisi parmi une batterie secondaire au sodium-ion selon la revendication 12, un module de batterie (4) selon la revendication 13 ou un bloc-batterie (1) selon la revendication 14.
